Europäisches Patentamt

European Patent Office

Office européen des brevets

(11) Publication number: **0 101 177**
**B1**

(12) **EUROPEAN PATENT SPECIFICATION**

(45) Date of publication of patent specification: 17.09.86

(21) Application number: 83303960.5

(22) Date of filing: 07.07.83

(51) Int. Cl.⁴: **C 10 G 65/04,** C 10 G 65/12, C 10 G 45/64, B 01 J 29/06, C 10 G 47/16

(54) A process and catalyst composition for upgrading a hydrocarbon feedstock.

(30) Priority: 09.08.82 US 406415

(43) Date of publication of application:
22.02.84 Bulletin 84/08

(45) Publication of the grant of the patent:
17.09.86 Bulletin 86/38

(84) Designated Contracting States:
BE DE FR GB IT NL

(56) References cited:
EP-A-0 028 062
FR-A-2 374 402
US-A-3 758 402
US-A-4 239 654

(73) Proprietor: **MOBIL OIL CORPORATION**
150 East 42nd Street
New York New York 10017 (US)

(72) Inventor: **Mitchell, Kenneth Michael**
740 Cornwallis Drive
Mt. Laurel New Jersey 08054 (US)
Inventor: **Shih, Stuart Shan-San**
7 Abinger Lane
Cherry Hill New Jersey 08003 (US)
Inventor: **Oleck, Stephen Michael**
241 Williams Avenue
Moorestown New Jersey 08057 (US)
Inventor: **Wilson, Robert Currin, Jr.**
138 North Bayard Avenue
Woodbury New Jersey 08096 (US)

(74) Representative: **West, Alan Harry**
Mobil Court 3 Clements Inn
London WC2A 2EB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for upgrading a hydrocarbon feedstock such as, vacuum gas oil or petroleum gas oil.

Present refinery practice in upgrading gas oils generally involves hydroprocessing to remove heteroatoms, followed by fluid catalytic cracking or high pressure hydrocracking. Such processes have entailed high equipment costs. Thus, fluid catalytic cracking of even hydroprocessed material requires high severity operation causing excessive coke formation, leading to reduced catalyst life. The necessity to use high pressure has placed an additional economic burden on the overall process.

In accordance with the present invention, there is provided a process for upgrading a hydrocarbon feedstock comprising:

(a) contacting the hydrocarbon feedstock with a hydrogenation catalyst in the presence of hydrogen; and

(b) contacting at least a fraction of the resulting product stream of (a) with a catalyst comprising an ultra stable zeolite, a crystalline zeolite of the ZSM—5 type, and a hydrogenation component under conditions suitable to effect cracking of hydrocarbons in said product stream; and

(c) recovering a product of reduced pour point directly from the effluent stream resulting from step (b).

Although U.S. Patent 3,758,402, describes a generally similar hydrocracking procedure using a catalyst comprising a large pore zeolite such as zeolite X or Y, a ZSM—5 type zeolite and a hydrogenation component, that document makes no mention of ultra stable zeolites. As described below and illustrated in the Examples herein, the use of such ultra stable zeolites according to the invention results in certain advantages compared to the use of conventional large pore zeolites.

The cracking catalyst employed herein comprises a composite of low sodium, ultra stable Y molecular sieve, a crystalline zeolite of the ZSM—5 type and a hydrogenation component. The ultra stable zeolites disclosed herein are well known to those skilled in the art. For example, they are described at pages 507—522 and pages 527—528 of the publication *Zeolite Molecular Sieves* by Donald W. Breck, John Wiley and Sons, Inc. 1974 and are exemplified in U.S. Patents 3,293,192 and 3,449,070. These low sodium, ultra stable zeolites are available commercially from the W. R. Grace Company.

The present process can be carried out at substantially lower pressures (1000 psig [6996 kPa]) and lower temperatures than those heretofore employed in two stage high pressure processes. This decreased pressure and temperature requirement reduces the capital expenditure required for cracking processes. The present process has been found to provide desired selective conversion of the above-characterized hydrocarbon feeds. This process enables the processing of hydrocracking feedstock containing high concentrations of nitrogen (as high as 200 ppm). The process provides distillate and residue products having reduced pour points.

The feedstock useful for upgrading in accordance with the present process generally can be characterized as having a gravity of 15 to 30° API, an initial boiling point of 650°F (343°C) and an endpoint of 1100°F (593°C). These materials may contain appreciable amounts of sulfur, oxygen and nitrogen capable of being effectively removed in accordance with the present process. Preferably the feed is a vacuum gas oil.

The present dual bed process may be conducted at a pressure within the range of 100 to 2000 psig (791 to 13891 kPa) and preferably between 500 and 1500 psig (3549 and 10444 kPa). The temperature is generally within the range of 550 to 950°F (288 to 510°C), with the temperature in the hydrotreating catalyst bed being within the range of 550 to 850°F (288 to 454°C), and in the hydrocracking catalyst bed within the range of 650 to 950°F (343 to 510°C). The feed is generally conducted through the catalyst reactors at an overall space velocity between 0.1 and 5 and preferably between 0.2 and 2, with hydrogen being present in each reactor zone in an amount between 1000 and 10,000 standard cubic feet per barrel (178 and 1780 l/l) of feed.

The catalysts employed in the first stage of the process are conventional hydrotreating catalysts which comprise one or more metals, metal oxides or metal sulfides from the metals of Group VIB and Group VIII on a solid support such as alumina, silica, titania, zirconia or mixtures thereof. Representative Group VIB metals include molybdenum, chromium and tungsten and Group VIII metals include nickel and cobalt. These metal components are in the form of metals or metal oxides, or metal sulfides on the indicated supports in amounts generally between 1 and 30 percent by weight.

Initial hydrotreating of the hydrocarbon feed serves to convert heteroatom hydrocarbon derivatives to gaseous products and converts some hydrocarbons to lighter fractions. The effluent from the hydrotreating zone can be cascaded directly to the hydrocracking stage, but generally to make the process more efficient, the effluent is topped by flashing or fractionating to remove the light products (low boiling components, $H_2S$, $NH_3$, etc.). The remaining bottoms product is passed through the hydrocracking zone over a catalyst comprising an ultra stable zeolite Y, ZSM—5 type zeolite and a hydrogenation component. The ZSM—5 type zeolite is preferably one selected from the group consisting of ZSM—5, ZSM—11, ZSM—22, ZSM—23, and ZSM—35, with ZSM—5 being particularly preferred. In the hydrocracking zone, the bottoms product is hydrocracked and dewaxed.

ZSM—5 is disclosed in U.S. Patent No. 3,702,886 and RE 29,948. ZSM—11 is disclosed in U.S. Patent No. 3,706,979. ZSM—23 is disclosed in U.S. Patent No. 4,076,842. ZSM—35 is disclosed in U.S. Patent No. 4,016,245.

2

ZSM—22 is disclosed in pending U.S. Patent Application Nos. 373,451 and 373,452. ZSM—22 is a highly siliceous zeolite which can be prepared from a reaction mixture containing a source of silica, an alkane diamine, an alkali metal oxide or an alkaline earth metal oxide, e.g., sodium, potassium, cesium, calcium or strontium, water, and alumina, and having a composition, in terms of mole ratios of oxides, falling within the following ratios:

| Reactants | | Broad | Preferred |
|---|---|---|---|
| $SiO_2/Al_2O_3$ | = | 20 to 30 | 30 to 1000 |
| $H_2O/SiO_2$ | = | 10 to 100 | 20 to 60 |
| $OH^-/SiO_2$ | = | 0 to 0.3 | 0.1 to 0.2 |
| $M^+/SiO_2$ | = | 0 to 2.0 | 0.1 to 1.0 |
| $RN/SiO_2$ | = | 0.01 to 2.0 | 0.05 to 1.0 |

wherein RN is a functional group of $C_2$—$C_{12}$ alkane diamine of the type $H_2N$—$(CH_2)_n$—$NH_2$ (abbreviated $C_nDN$), n = 2 to 12, and preferably is 5 to 8, and M is an alkali metal or an alkaline earth metal and maintaining the mixture at crystallization temperature until crystals of the ZSM—22 zeolite are formed. Thereafter, the crystals are separated from the liquid by any conventional means, washed and recovered.

Crystallization can be carried out at either static or stirred conditions in a reactor vessel, e.g., a polypropylene jar or teflon lined or stainless steel autoclaves at 80°C (176°F) to 210°C (410°F) for 6 hours to 150 days. Thereafter, the crystals are separated from the liquid and recovered. The composition can be prepared utilizing materials which supply the appropriate oxide. Such materials include aluminates, alumina, silicates, sodium silicate, silica hydrosol, silica gel, silicic acid, sodium, potassium or cesium hydroxide, and an alkane diamine. Suitable diamines are, e.g., ethanediamine, propanediamine, butanediamine, pentanediamine, hexanediamine, heptanediamine, octane-diamine, nonanediamine, decanediamine, undecanediamine, duodecanediamine. The reaction mixture can be prepared either batchwise or continuously. Crystal size and crystallization time of the new crystalline material will vary with the nature of the reaction mixture employed and the crystallization conditions.

As set forth above, the ZSM—22 zeolite can be prepared at a relatively wide range of $SiO_2/Al_2O_3$ ratios of 20 to infinity ($\infty$). However, it has been found that larger alkali metal cations, e.g., $K^+$ and $Cs^+$, are preferably used at the $SiO_2/Al_2O_3$ ratios of 20 to 90 to obtain ZSM—22 crystals substantially free of impurities or other zeolites. The potassium ($K^+$) cation is preferred at such low $SiO_2/Al_2O_3$ ratios because cesium (Cs) appears to decrease the reaction rate. At the $SiO_2/Al_2O_3$ ratios of 90 or above, smaller cations, e.g., sodium ($NA^+$) cations, are preferably used to produce substantially 100% crystalline ZSM—22.

In the as-synthesized form, the ZSM—22 zeolite has a calculated composition, in terms of moles of oxides, after dehydration, per 100 moles of silica, as follows:

(0.02 to 10) RN: (0 to 2)$M_{2/n}O$:(0 to 5)$Al_2O_3$: 100 $SiO_2$ wherein RN is a functional group of $C_2$—$C_{12}$ alkane diamine and M is an alkali metal or an alkaline earth metal having a valence n, e.g., Na, K, Cs, Li, Ca or Sr.

The ZSM—22 zeolite has a definite X-ray diffraction pattern, set forth below in Table I, which distinguishes it from other crystalline materials.

# 0 101 177

TABLE I

Most Significant Lines of ZSM—22

| Interplanar d-spacings (A) | Relative Intensity (I/Io) |
| --- | --- |
| 10.9 ± 0.2 | M—VS |
| 8.7 ± 0.16 | W |
| 6.94 ± 0.10 | W—M |
| 5.40 ± 0.08 | W |
| 4.58 ± 0.07 | W |
| 4.36 ± 0.07 | VS |
| 3.68 ± 0.05 | VS |
| 3.62 ± 0.05 | S—VS |
| 3.47 ± 0.04 | M—S |
| 3.30 ± 0.04 | W |
| 2.74 ± 0.02 | W |
| 2.52 ± 0.02 | W |

These values were determined by standard techniques. The radiation was the K-alpha doublet of copper and a diffractometer equipped with a scintillation counter and an associated computer was used. The peak heights, I, and the positions as a function of $2\times$ theta, where theta is the Bragg angle, were determined using algorithms on the computer associated with the spectrometer. From these, the relative intensities, 100 $I/I_o$, where $I_o$ is the intensity of the strongest line or peak, and d (obs.) the interplanar spacing in Angstrom, corresponding to the recorded lines, were determined. In Table I, the relative intensities are given in terms of the symbols vs = very strong, s = strong, m = medium, and w = weak. It should be understood that this X-ray diffraction pattern is characteristic of all the species of ZSM—22 zeolite compositions. Ion exchange of the alkali metal cations with other ions results in a zeolite which reveals substantially the same X-ray diffraction pattern with some minor shifts in interplanar spacing and variation in relative intensity. Other minor variations can occur, depending on the silica to alumina ratio of the particular sample, as well as its degree of thermal treatment.

The ZSM—22 zeolite freely sorbs normal hexane and has a pore dimension greater than 4 Angstroms, and a Constraint Index of 2.6 at 800°F (427°C). The meaning of Constraint Index and its method of determination are fully described in, for example, U.S. Patent No. 3,905,915.

The original cations associated with each of the crystalline zeolites utilized herein may be replaced by a wide variety of other cations according to techniques well known in the art. Typical replacing cations include hydrogen, ammonium and metal cations, including mixtures of the same. Of the replacing metallic cations, particular preference is given to cations of metals such as rare earth metals, magnesium, calcium, as well as metals of Group IIB of the Periodic Table, e.g., zinc; and Group VIII of the Periodic Table, e.g. nickel, cobalt, platinum and palladium.

Typical ion exchange techniques would be to contact the particular zeolite with a salt of the desired replacing cation. Although a wide variety of salts can be employed, particular preference is given to chlorides, nitrates and sulfates.

Representative ion exchange techniques are disclosed in a wide variety of patents including U.S. 3,140,249; U.S. 3,130,251; and U.S. 3,140,253.

Following contact with a solution of the desired replacing cation, the zeolite is preferably washed with water and dried at a temperature ranging from 150 to 600°F (66 to 316°C), and thereafter calcined in air or inert gas at temperatures ranging from 500 to 1500°F (260 to 816°C) for periods of time ranging from 1 to 48 hours or more. It has been further found that a catalyst of improved properties may often be obtained by subjecting the ZSM—5 type zeolite to treatment with steam at elevated temperature ranging from 500°F to 1200°F (260°C to 649°C) and preferably 750°F to 1000°F (399°C to 538°C). The treatment may be accomplished in an atmosphere of 100% steam or an atmosphere consisting of steam and a gas which is

4

substantially inert to the zeolite. A similar treatment can be accomplished at lower temperatures and elevated pressure, e.g., 350°F to 700°F (177°C to 371°C) at 10 to 200 atmospheres ($1 \times 10^3$ to $2 \times 10^4$ kPa).

Prior to use, the zeolites should be dehydrated at least partially. This can be done by heating to a temperature in the range of 200 to 1000°F (93°C to 538°C) in an atmosphere, such as air, nitrogen, etc., and at atmospheric or subatmospheric pressures for between 1 and 48 hours. Dehydration can also be performed at lower temperatures merely by using a vacuum, but a longer time is required to obtain sufficient amount of dehydration.

In the hydrocracking catalyst, the ZSM—5 type zeolite is present as a physical mixture with ultra stable zeolite Y, a hydrogenation component and a binder. In one embodiment, a mixture of particles can be used in which individual particles each contain one of the two types of zeolites. Thus, for example, a mixture of spray dried particles comprising ZSM—5 type crystals in a matrix and particles comprising ultra stable zeolite crystals in a matrix can be used in the hydrocracking unit. Preferably, the hydrocracking catalyst is a porous pelletized extrudate combining the two types of zeolites previously described, a hydrogenation component and binder. Most preferably the ZSM—5 type zeolite and the ultra stable zeolite Y are combined, dispersed or otherwise intimately admixed with a porous matrix in such proportions that the resulting product contains from 1% to 95% by weight, and preferably from 10 to 50% by weight, of the total zeolites in the final composite. The catalyst components can, of course, also be pelleted, cast, molded, or otherwise formed into pieces of desired size and shape such as rods, spheres and pellets. In any case, the ratio by weight of ZSM—5 type zeolite to ultra stable zeolite should be within the range of 1:25 to 3:1 and preferably from 1:10 up to 2:1 and still more preferably 1:5 to 1:1.

The term "porous matrix" includes inorganic compositions with which the aluminosilicates can be combined, dispersed or otherwise intimately admixed wherein the matrix may be active or inactive. Inorganic compositions are preferred and of these the most preferred are inorganic oxides, such as alumina, silica, silica-alumina and clay, because of their superior porosity.

The particle size or each type of zeolite making up the catalyst system is not narrowly critical but normally should be less than 100 microns, with particle sizes of less than 10 microns being preferred. It is also to be noted that each individual component in the catalyst system need not be of the same particle size.

As indicated previously the hydrocracking catalyst in the seocnd stage also includes a metal hydrogenation component such as palladium, normally in a concentration of between 0.1 to 5 percent.

The accompanying drawing is a graph comparing the activity over time of various hydrocracking catalysts when used to hydrocrack a hydrotreated vacuum gas oil.

## Example

Arabian light vacuum gas oil (VGO) containing 600 ppm of nitrogen was hydrotreated at a total pressure of 1200 psig (8375 kPa), an LHSV of 2.0, a hydrogen/oil ratio of 4000 standard cubic feet of hydrogen per barrel (712 l/l) and a temperature of 725°F (385°C) over a commercial nickel-molybdenum-alumina catalyst manufactured by Armak Catalyst Division of Akzo Chemicals. The hydrotreated product was topped by fractionation to yield a 650°F (343°C) plus bottoms which amounted to 90 weight percent of the feed. Properties of the feedstock and the 650°F (343°C) bottoms from the hydrotreating operation are presented in Table 1 below. The hydrotreating removed heteroatoms (nitrogen and sulfur) and converted 10 weight percent of the charge VGO to less than 650°F (343°C) products.

The 650°F (343°C) plus bottoms from the hydrotreated VGO which contained 210 ppm of nitrogen was used as the feedstock for evaluating three composite hydrocracking catalysts in a pilot plant. Each catalyst consisted of 50% by weight of Y zeolite, 15% by weight of ZSM—5 zeolite and 35% by weight of alumina. In two of the samples, the zeolite utilized was a rare earth exchanged zeolite Y. In the third sample the zeolite was a low sodium ultra stable zeolite Y. The manufactured by the Davison Chemical Division, W. R. Grace and Company, and sold as Low Soda, Ultra Stable molecular sieve. It had the following physical and chemical properties.

| | |
|---|---|
| Total Volatiles (%) | 26.79 |
| Alumina as $Al_2O_3$ (%) | 20.26 |
| Silica as $SiO_2$ (%) | 79.28 |
| $SiO_2/Al_2O_3$ Mol. Ratio | 6.6 |
| Soda as $Na_2O$ (%) | .11 |
| Sulfate as $SO_4$ (%) | .21 |
| Surface Area BET ($M^2/g$) | 800 |
| Crystallinity | 101 |
| Cell Size (A°) | 24.59 |

5

# 0 101 177

TABLE 1

FEEDSTOCK PROPERTIES

| | VACUUM GAS OIL (VGO) | 650°F (343°C) + BOTTOMS FROM HYDROTREATED VGO* |
|---|---|---|
| GRAVITY, °API | 22.2 | 27.7 |
| HYDROGEN, WT % | 12.07 | 13.24 |
| NITROGEN, PPM | 600 | 210 |
| SULFUR, WT % | 2.45 | 0.12 |
| POUR POINT, °F (°C) | 105 (41) | 110 (43) |
| PARAFFINS, WT % | 24 | 28 |
| NAPHTHENES, WT % | 25 | 31 |
| AROMATICS, WT % | 51 | 41 |
| DISTILLATION(D1160),°F(°C) | | |
| 5% | 660 (349) | 693 (367) |
| 10% | 690 (366) | 709 (376) |
| 30% | 747 (397) | 754 (401) |
| 50% | 802 (428) | 803 (428) |
| 70% | 882 (472) | 868 (463) |
| 90% | 1010 (543) | 959 (515) |
| 95% | 1035 (557) | 993 (534) |

\* 650°F (343°C) + fraction equals 90 wt % of raw VGO.

In addition, the ZSM—5 component in one of the REY-containing samples was steam treated whereas it was unsteamed in the remaining two samples as indicated in the Table 2 below. The catalysts were presulfided in a 2% hydrogen sulfide/hydrogen mixture and tested in a down flow, fixed bed pilot unit.

# 0 101 177

## TABLE 2

### CATALYST PROPERTIES

| | SMO—9914 | SMO—9918 | SMO—9996 |
|---|---|---|---|
| Alpha Activity | 900 | 1550 | 670 |

**Compositions**

(Metal Free Base)

| | | | |
|---|---|---|---|
| Y Zeolite, wt % | ⟵———————— 50 ————————⟶ | | |
| ZSM—5, wt % | ⟵———————— 15 ————————⟶ | | |
| Al$_2$O$_3$, wt % | ⟵———————— 35 ————————⟶ | | |
| Type of Y Zeolite | REY (1) | USY (2) | REY (1) |
| SiO$_2$/Al$_2$O$_3$ of Y | 5 | 6.6 | 5 |
| Steaming of ZSM—5 | No | No | Yes |
| Active Metal(s) (Based on finished catalyst) | ⟵———————— 0.35 wt % Pd ————————⟶ | | |

**Physical Properties**

| | | | |
|---|---|---|---|
| Surface area, m$^2$/g | 433 | 488 | 417 |
| Pore volume, cc/g | 0.653 | 0.580 | 0.603 |
| Average Pore Diam., Å | 60 | 48 | 58 |

(1) Rare Earth Exchanged Zeolite Y
(2) Ultra stable zeolite Y

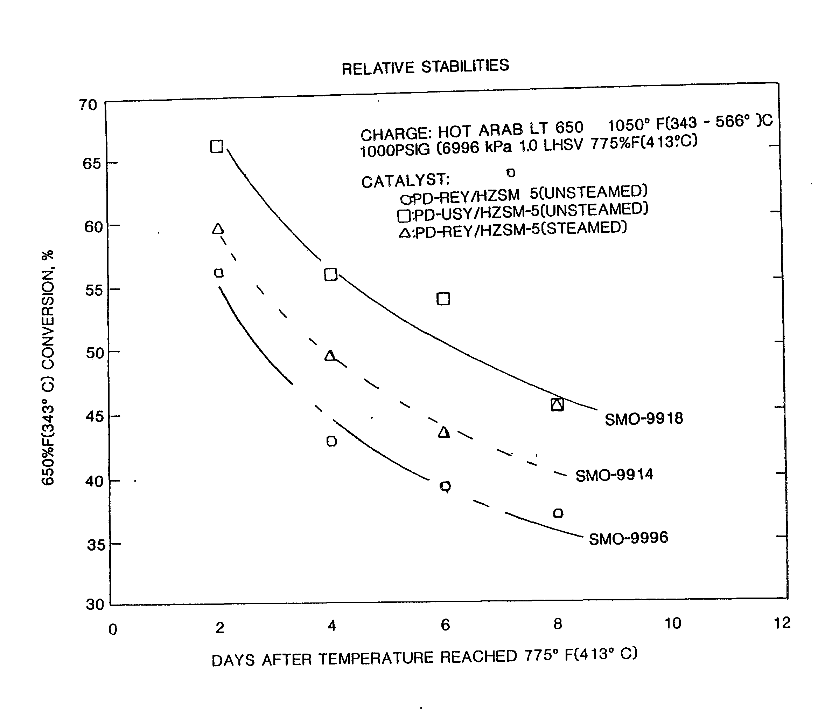

The feedstock generated as described above was passed with hydrogen over each of the catalyst compositions in a down flow fixed bed pilot unit under conditions of 1000 psig (6996 kPa) total pressure and an LHSV of 1.0. The reactor temperature was gradually increased from 600°F (316°C) to 775°F (413°C) and then the temperature was kept constant for eight days. Figure 1 shows the conversion of 650°F (343°C)+ boiling material as a function of days on stream after the temperature had reached 775°F (413°C). From this graph it is readily apparent that the catalyst made from the ultra stable zeolite Y (SMO—9918) is most active and stable.

The overall process yields at 70% conversion of 650°F (343°C)+ vacuum gas oil including hydrotreating and hydrocracking are given in Table 3. Yields for sample SMO—9996 were similar to sample SMO—9914 and are not included in Table 3. Both SMO—9914 and SMO—9918 catalysts produce low pour point 330—650°F (166—343°C) distillate and 650°F (343°C)+ bottoms as shown in Table 3.

## TABLE 3

### OVERALL PROCESS YIELDS

| Catalyst | Pd—USY/HZSM—5 | Pd— REY/HZSM—5 |
|---|---|---|
| | SMO—9918 | SMO—9914 |
| $C_1$—$C_4$, Wt % | 16.8 | 9.7 |
| $C_5$—330°F (166°C), Wt % (G) | 28.7 | 28.7 |
| 330—650°F (166—343°C), Wt % (D) | 23.3 | 36.0 |
| 650°F (343°C)+ | 28.8 | 23.6 |
| $H_2$ Consumption, SCF/Barrel (l/l) | 1080 (192) | 1060 (189) |
| G/D | 1.2 | 0.8 |

### Product Cut Fraction Properties

330—650°F (166—343°C)

| | | SMO—9918 | SMO—9914 |
|---|---|---|---|
| Pour Point, °F (°C) | | −65 (−54) | −65 (−54) |
| Cloud Point, °F (°C) | | −15 (−26) | −15 (−26) |
| Cetane Index (Calculated) | | 46 | 42 |
| Sulfur, Wt % | | 0.05 | 0.06 |

| 650°F (343°C)+ | Feed(1) | SMO—9918 | SMO—9914 |
|---|---|---|---|
| Pour Point, °F (°C) | 110 (43) | 5 (−15) | 5 (−15) |
| Sulfur, Wt % | 0.12 | 0.1 | 0.1 |
| Aromatics, Wt % | 41 | 44 | 49 |

(1) 650°F (343°C)+ bottom from hydrotreated VGO

**Claims**

1. A process for upgrading a hydrocarbon feedstock comprising:
(a) contacting the hydrocarbon feedstock with a hydrogenation catalyst in the presence of hydrogen; and
(b) contacting at least a fraction of the resulting product stream of (a) with a catalyst comprising an ultra stable zeolite, a crystalline zeolite of the ZSM—5 type, and a hydrogenation component under conditions suitable to effect cracking of hydrocarbons in said product stream; and
(c) recovering a product of reduced pour point directly from the effluent stream resulting from step (b).

2. The process of Claim 1 wherein the hydrogenation catalyst of (a) comprises one or more metals selected from of molybdenum, chromium, tungsten, nickel, cobalt, palladium, and platinum deposited on a solid porous support selected from alumina, titania, zirconia, silica, and mixtures thereof.

3. The process of Claim 1 or Claim 2 wherein the cracking catalyst of step (b) includes an inorganic oxide binder.

4. The process of any preceding Claim wherein the ultra stable zeolite of (b) is ultra stable Zeolite Y.

5. The process of any preceding Claim wherein the hydrogenation step (a) is conducted at a temperature between 550 and 850°F (288 and 454°C), a pressure between 100 and 2000 psig (791 and 13891 kPa) and an LHSV between 0.1 and 5.

6. The process of Claim 5 wherein the hydrogenation step (a) is conducted at a pressure between 500 and 1500 psig (3549 and 10444 kPa) and an LHSV between 0.2 and 2.

7. The process of any preceding Claim wherein the contacting step (b) is conducted at a temperature between 650 and 950°F (343 and 510°C), a pressure between 100 and 200 psig (791 and 13891 kPa) and an ' LHSV between 0.1 and 5.

8. The process of Claim 7 wherein the contacting step (b) is conducted at a pressure between 500 and 1500 psig (3549 and 10444 kPa), and an LHSV between 0.2 and 2.

9. A catalyst composition comprising a mixture of an ultra stable zeolite Y, a crystalline zeolite of the ZSM—5 type, inorganic oxide binder, and a hydrogenation component.

10. The composition of Claim 9 wherein the ratio by weight of ZSM—5 type zeolite to ultra stable Zeolite Y is between 1:25 and 3:1.

**Patentansprüche**

1. Verfahren zur Aufwertung eines Kohlenwasserstoffausgangsstoffes, welches umfaßt:

(a) Inkontaktbringen des Kohlenwasserstoffausgangsstoffes mit einem Hydrierungskatalysator in Gegenwart von Wasserstoff; und

(b) Inkontaktbringen zumindest einer Fraktion des resultierenden Produktstroms von (a) mit einem Katalysator, der einen ultra-stabilen Zeolith, einen kristallinen Zeolith von dem Typ ZSM—5 und eine Hydrierungskomponente umfaßt, unter Bedingungen, die geeignet sind, um das Cracken der Kohlenwasserstoffe in dem Produktstrom zu bewirken; und

(c) direkte Rückgewinnung eines Produktes mit reduziertem Pourpoint aus dem Abflußstrom, der aus der Stufe (b) resultiert.

2. Verfahren nach Anspruch 1, worin der Hydrierungskatalysator von (a) ein oder mehrere Metalle, ausgewählt aus Molybden, Chrom, Wolfram, Nickel, Kobalt, Palladium und Platin umfaßt, das auf einem festen porösen Träger abgelagert ist, der aus Alumiumoxid, Titandioxid, Zirkondioxid, Siliciumdioxid und Mischungen davon besteht.

3. Verfahren nach Anspruch 1 oder 2, worin der Crack-Katalysator der Stufe (b) ein Bindemittel eines anorganischen Oxids umfaßt.

4. Verfahren nach einem der vorstehenden Ansprüche, worin der ultra-stabile Zeolith von (b) ultrastabiler Zeolith Y ist.

5. Verfahren nach einem der vorstehenden Ansprüche, worin die Hydrierungsstufe (a) bei einer Temperatur zwischen 550 und 850°F (288 und 454°C), einem Druck zwischen 100 und 2000 psig (791 und 13891 kPa) und einer LHSV zwischen 0,1 und 5 Durchgeführt wird.

6. Verfahren nach Anspruch 5, worin die Hydrierungsstufe (a) bei einem Druck zwischen 500 und 1500 psig (3549 und 10444 kPa) und einer LHSV zwischen 0,2 und 2 durchgeführt wird.

7. Verfahren nach einem der vorstehenden Ansprüche, worin die Stufe des Inkontaktbringens (b) bei einer Temperatur zwischen 650 und 950°F (343 und 510°C), einem Druck zwischen 100 und 2000 psig (791 und 13891 kPa) und einer LHSV zwischen 0,1 und 5 durchgeführt wird.

8. Verfahren nach Anspruch 7, worin die Stufe des Inkontaktbringens (b) bei einem Druck zwischen 500 und 1500 psig (3549 und 10444) kPa) und einer LHSV zwischen 0,2 und 2 durchgeführt wird.

9. Katlysatorzusammensetzung, die eine Mischung eines ultra-stabilen Zeolith Y, eines kristallinen Zeolith vom Typ ZSM—5, ein anorganisches Oxidbindemittel und eine Hydrierungskomponente umfaßt.

10. Zusammensetzung nach Anspruch 9, worin das Gewichtsverhältnis des Zeolith vom Typ ZSM—5 zum ultra-stabilen Zeolith Y zwischen 1:25 und 3:1 beträgt.

**Revendications**

1. Un procédé de valorisation d'une charge d'hydrocarbure consistant:

(a) à mettre la charge d'hydrocarbures au contact d'un catalyseur d'hydrogénation en présence d'hydrogène; et

(b) à mettre au moins une fraction de la charge traitée en (a) au contact d'un catalyseur comprenant une zéolite ultrastable, une zéolite cristalline du type ZSM—5 et un agent d'hydrogénation dans des conditions convenables pour effectuer le craquage des hydrocarbures contenues dans cette charge traitée; et

(c) à récupérer un produit de point d'écoulement réduit directement dans l'effluent résultant de l'étape (b).

2. Un procédé selon la revendication 1, dans lequel le catalyseur d'hydrogénation de (a) comprend un ou plusieurs métaux choisis dans la liste contenant molybdène, chrome, tungstène, nickel, cobalt, palladium et platine, déposé sur un support poreux choisi dans la liste contenant alumine, titane, zircone, silice et leurs mélanges.

3. Un procédé selon la revendication 1 ou 2, dans lequel le catalyseur de craquage de l'étape (b) comprend un liant à base d'oxyde minéral.

**0 101 177**

4. Un procédé selon l'une quelconque des revendications précédentes, dans lequel la zéolite ultrastable de (b) est la zéolite Y ultrastable.

5. Un procédé selon l'une quelconque des revendications précédentes, dans lequel l'étape d'hydrogénation (a) est effectuée à une température comprise entre 288 et 454°C (550 et 850°F), sous une pression comprise entre 791 et 13 891 kPa (100 et 2000 psig) et à une VSHP comprise entre 0,1 et 5.

6. Un procédé selon la revendication 5, dans lequel l'étape d'hydrogénation (a) est effectuée à une pression comprise entre 3 549 et 10 444 kPa (500 et 1500 psig) et à une VSHP comprise entre 0,2 et 2.

7. Un procédé selon l'une quelconque des revendications précédentes, dans lequel l'étape de contact (b) est effectuée à une température comprise entre 343 et 510°C (650 et 950°F), sous une pression comprise entre 791 et 13 891 kPa (100 et 2000 psig) et à une VSHP comprise entre 0,1 et 5.

8. Un procédé selon la revendication 7, dans lequel l'étape de mise en contact (b) est effectuée sous une pression comprise entre 3 549 et 10 444 kPa (500 et 1500 psig) et à une VSHP comprise entre 0,2 et 2.

9. Composition de catalyseur qui comprend un mélange d'une zéolite Y ultrastable, d'une zéolite cristalline du type ZSM—5, d'un liant à base d'oxyde minéral et d'un agent d'hydrogénation.

10. Composition selon la revendication 9, dans laquelle le rapport en poids de la zéolite de type ZSM—5 à la zéolite Y ultrastable est compris entre 1/25 et 3/1.

10

RELATIVE STABILITIES

CHARGE: HOT ARAB LT 650    1050° F(343 - 566° )C
1000PSIG (6996 kPa 1.0 LHSV 775%F(413°C)

CATALYST:
O:PD-REY/HZSM 5(UNSTEAMED)
□:PD-USY/HZSM-5(UNSTEAMED)
△:PD-REY/HZSM-5(STEAMED)

SMO-9918

SMO-9914

SMO-9996

650%F(343° C) CONVERSION, %

DAYS AFTER TEMPERATURE REACHED 775° F(413° C)

0 101 177